# EUROPÄISCHE PATENTSCHRIFT

(11) **EP 3 523 160 B1**
(45) Veröffentlichungstag und Bekanntmachung des Hinweises auf die Patenterteilung: **07.09.2022**
(21) Anmeldenummer: 17781126.2
(22) Anmeldetag: 10.10.2017
(51) Int. Cl.: B60N 2/90

(54) **GETRIEBEANORDNUNG FÜR EINEN SPINDELANTRIEB, SPINDELANTRIEB UND FAHRZEUGSITZ**
TRANSMISSION ARRANGEMENT FOR A SPINDLE DRIVE, SPINDLE DRIVE AND VEHICLE SEAT
AGENCEMENT DE TRANSMISSION POUR MÉCANISME D'ENTRAÎNEMENT DE BROCHE, ENTRAÎNEMENT DE BROCHE ET SIÈGE DE VÉHICULE

(30) Priorität: 10.10.2016 DE 102016219598
(43) Veröffentlichungstag der Anmeldung: 14.08.2019
(73) Patentinhaber: KEIPER Seating Mechanisms Co., Ltd., Shanghai, 201315 (CN)
(72) Erfinder: STANIC, Ivica, 41542 Dormagen (DE)
(74) Vertreter: Liedtke & Partner Patentanwälte
(86) Internationale Anmeldenummer: PCT/EP2017/075769
(87) Internationale Veröffentlichungsnummer: WO 2018/069292

(56) Entgegenhaltungen:
- WO-A1-03/068551
- WO-A1-2015/113929
- DE-A1-102005 046 356
- DE-A1-102006 009 576
- DE-B3-102012 106 196

## Beschreibung

Die Erfindung betrifft eine Getriebeanordnung für einen Spindelantrieb nach den Merkmalen des Oberbegriffs des Anspruchs 1, einen Spindelantrieb und einen Fahrzeugsitz.

Aus dem Stand der Technik sind Spindelantriebe, beispielsweise für einen Verstellmechanismus eines Fahrzeugs, allgemein bekannt. Derartige Verstellmechanismen werden beispielsweise für eine elektrische Höhenverstellung eines Fahrzeugsitzes verwendet. Derartige Spindelantriebe umfassen einen Elektromotor und eine Getriebeanordnung, mittels welcher eine Drehbewegung des Elektromotors auf eine Gewindespindel des Spindelantriebs übertragen wird. Durch den Spindelantrieb wird es ermöglicht, eine rotatorische Bewegung des Elektromotors über die Getriebeanordnung in eine translatorische Bewegung umzuwandeln.

In der DE 10 2012 106 196 B3 wird ein Verstellantrieb für einen Kraftfahrzeugsitz beschrieben. Der Verstellantrieb umfasst eine an einem Gehäuse gelagerte Antriebseinheit, eine innerhalb des Gehäuses angeordnete, durch die Antriebseinheit antreibbare Spindelmutter, eine an der Spindelmutter angeordnete, gegenüber dem Gehäuse in Längsachsenrichtung verstellbare Gewindespindel und einen das Gehäuse zumindest teilweise umgebenden Käfig. Das Gehäuse ist gelenkig mit dem Käfig verbunden und über ein an dem Gehäuse angeordnetes Abstützelement an dem Käfig anliegend geführt. Im Bereich zwischen der Spindelmutter und dem Abstützelement ist zur Festlegung des Gehäuses gegenüber dem Käfig ein axial mit einer Anschlagfläche an der Spindelmutter anliegendes, gegenüber dem Abstützelement über ein Schraubgewinde axial zur Spindelmutter verstellbares Distanzelement angeordnet.

Aus der WO 2015/113929 A1 ist ein Stellantrieb für ein Kraftfahrzeug, insbesondere für einen Kraftfahrzeugsitz, bekannt. Der Stellantrieb umfasst einen Elektromotor, der eine Ausgangswelle aufweist, ein Getriebe, das mit der Ausgangswelle verbunden ist und ein Getriebegehäuse aufweist, und eine Getriebehaltevorrichtung, die das Getriebegehäuse schwenkbar um eine Schwenkachse lagert. Ein mit der Schwenkachse fluchtender Wellenabschnitt des Getriebegehäuses ist von einem Haltebügel der Getriebehaltevorrichtung zumindest teilweise umgriffen. Die Ausgangswelle ist dabei außerhalb des Haltebügels angeordnet.

In der WO 03/068551 A1 wird ein Spindel- oder Schneckenantrieb für Verstelleinrichtungen in Kraftfahrzeugen beschrieben. Der Spindel- oder Schneckenantrieb ist mit einer feststehenden Spindel oder einer feststehenden Zahnstange an einem ersten von zwei relativ zueinander verstellbaren Teilen befestigt und weist ein Getriebe auf, das mit dem zweiten der relativ zueinander verstellbaren Teile verbunden ist. Das Getriebegehäuse ist spielfrei und um mindestens eine Achse schwenkbar von einer Lagerschale eingefasst, die aus zwei ineinander steckbaren Lagerplatten besteht, die nach der Einfassung des Getriebegehäuses miteinander verbindbar sind. Das Getriebegehäuse besteht aus Kunststoff und weist ein konkaves oder konvexes Gehäuseteil auf, das von einem konvexen oder konkaven Lagerschalenabschnitt, der aus einem zur Aufnahme von Crashkräften geeigneten Werkstoff, insbesondere aus einem metallischem Werkstoff, bestehenden Lagerschale umfasst ist.

Aus der DE 10 2005 046 356 A1 ist eine Getriebe-Antriebseinheit mit einem Aufnahmemodul zum Verstellen eines beweglichen Teils im Kraftfahrzeug bekannt. Die Getriebe-Antriebseinheit umfasst ein mittels eines Antriebsaggregats antreibbares Antriebsrad, das auf einer Spindel angeordnet ist und drehbar in einem Trägerrohr gelagert ist. Am Trägerrohr ist ein nachträglich separat montierbares Aufnahmemodul befestigbar, das eine Aufnahme für eine Befestigungsvorrichtung am Kraftfahrzeug oder dem zu verstellenden Teil aufweist.

In der DE 10 2006 009 576 A1 wird ein Spindelantrieb zum Verstellen eines beweglichen Teils im Kraftfahrzeug beschrieben. Der Spindelantrieb umfasst ein Antriebsaggregat, das ein auf einer Spindel gelagertes Antriebsrad antreibt. Das Antriebsrad ist drehbar in einem Trägerrohr gelagert. An einem Ende des Trägerrohrs ist eine Aufnahme für eine Befestigungsvorrichtung zum Ableiten von Crash-Kräften vorgesehen. Die Spindel mit dem Antriebsrad ist in einer ersten Einbauposition oder in einer zweiten, um 180° gedrehten, Einbauposition in das identische Trägerrohr einbaubar.

Aufgabe der vorliegenden Erfindung ist es, eine gegenüber dem Stand der Technik verbesserte Getriebeanordnung für einen Spindelantrieb, einen gegenüber dem Stand der Technik verbesserten Spindelantrieb und einen gegenüber dem Stand der Technik verbesserten Fahrzeugsitz anzugeben.

Die Aufgabe wird erfindungsgemäße gelöst durch eine Getriebeanordnung für einen Spindelantrieb mit den Merkmalen des Anspruchs 1, durch einen Spindelantrieb mit den Merkmalen des Anspruchs 4 und durch einen Fahrzeugsitz mit den Merkmalen des Anspruchs 5.

Die Aufgabe wird somit erfindungsgemäß durch eine Getriebeanordnung für einen Spindelantrieb gelöst, welche ein Getriebegehäuse, einen Getriebehalter und in einer möglichen Ausführungsform einen Getriebedeckel umfasst, wobei eine Schwenkachse, um welche der Spindelantrieb drehbar und/oder schwenkbar lagerbar oder gelagert ist, durch den Getriebehalter gebildet ist, und zumindest eine Aufnahme für die zumindest eine Schwenkachse durch das Getriebegehäuse gebildet ist.

Durch die erfindungsgemäße Lösung werden somit eine Bauraum-, Gewicht- und Montageoptimierung sowie eine Kostenreduzierung und Wirkungsgradverbesserung bei Spindelantrieben erreicht, welche die erfindungsgemäße Getriebeanordnung aufweisen. Insbesondere wird durch die erfindungsgemäße Lösung eine stabile Lagerung des Spindelantriebs erreicht.

Ein weiterer Vorteil der erfindungsgemäßen Lösung besteht darin, dass der Getriebedeckel nur auf Druck über die Gewindespindel und ein Schneckenrad in einer Hauptlastrichtung beansprucht wird. Daher muss keine feste Verbindung zwischen Getriebedeckel und Getriebegehäuse oder zwischen Getriebedeckel und Getriebehalter realisiert werden. Der Getriebedeckel oder zumindest eine Außenseite des Getriebedeckels kann zur Ausführung der Dreh- und/oder Schwenkbewegung um die Schwenkachse beispielsweise konkav oder konvex ausgeführt werden.

Die Aufgabe wird des Weiteren, wie oben bereits erwähnt, erfindungsgemäß durch einen Spindelantrieb mit einer solchen Getriebeanordnung und einen Fahrzeugsitz mit einem solchen Spindelantrieb gelöst, wodurch auch für den Spindelantrieb und den Fahrzeugsitz mit diesem Spindelantrieb die oben bereits genannten Vorteile gelten. Ein derartiger Spindelantrieb, für welchen die Getriebeanordnung vorgesehen ist, ist beispielsweise für einen Verstellmechanismus eines Fahrzeugs geeignet. Derartige Verstellmechanismen werden beispielsweise für eine elektrische Höhenverstellung des Fahrzeugsitzes des Fahrzeugs verwendet.

In einer Ausführungsform ist der Getriebedeckel oder zumindest eine Außenseite des Getriebedeckels zur Ausführung der Dreh- und/oder Schwenkbewegung um die Schwenkachse konkav oder konvex ausgebildet, um diese Schwenkbewegung nicht zu behindern, denn durch diese Ausbildung des Getriebedeckels wird beispielsweise ein Anschlagen an einem anderen Bauteil während der Schwenkbewegung vermieden.

Der Spindelantrieb umfasst eine Gewindespindel, um eine rotatorische Bewegung, eines Elektromotors des Spindelantriebs, in eine translatorische Bewegung umzuwandeln.

Erfindungsgemäß umfasst die Getriebeanordnung zwei Bolzen, welche die zumindest eine Schwenkachse bilden und als ein Bestandteil des Getriebehalters an diesem ausgebildet sind.

Der Spindelantrieb umfasst erfindungsgemäß einen Elektromotor und die Gewindespindel. Insbesondere für einen Einsatz in einem Fahrzeug, insbesondere in einem Innenraum des Fahrzeugs, zum Beispiel am Fahrzeugsitz, ist dies ein geeigneter Antrieb.

Ein Ausführungsbeispiel der Erfindung wird anhand von Zeichnungen näher erläutert. Dabei zeigen:
- Figur 1: schematisch eine perspektivische Darstellung einer aus dem Stand der Technik bekannten Ausführungsform eines Spindelantriebs,
- Figur 2: schematisch eine perspektivische Darstellung einer weiteren aus dem Stand der Technik bekannten Ausführungsform eines Spindelantriebs,
- Figur 3: schematisch eine perspektivische Darstellung einer 2. nicht zur Erfindung gehörenden Ausführungsform eines Spindelantriebs,
- Figur 4: schematisch eine Darstellung eines Bereichs der in Figur 3 dargestellten, nicht zur Erfindung gehörenden Ausführungsform des Spindelantriebs,
- Figur 5: schematisch eine perspektivische Darstellung einer 2. nicht zur Erfindung gehörenden Ausführungsform eines Spindelantriebs,
- Figur 6: schematisch eine Darstellung einer zur Erfindung gehörenden Ausführungsform eines Spindelantriebs, und
- Figur 7: schematisch einen Fahrzeugsitz.

Einander entsprechende Teile sind in allen Figuren mit den gleichen Bezugszeichen versehen.

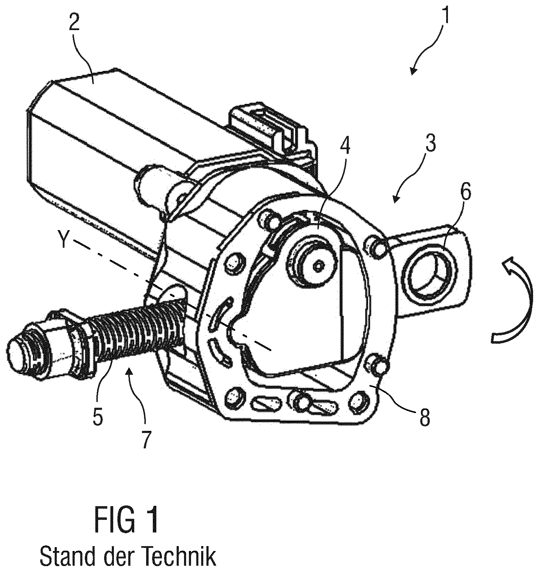

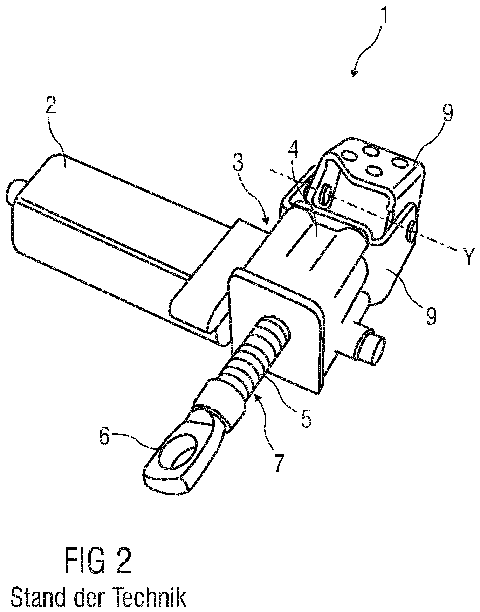

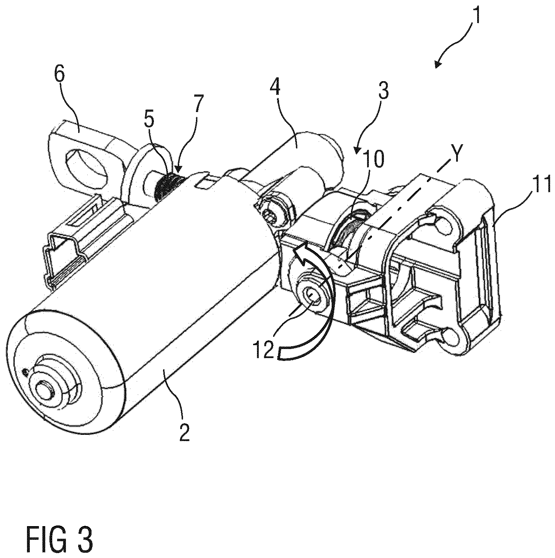

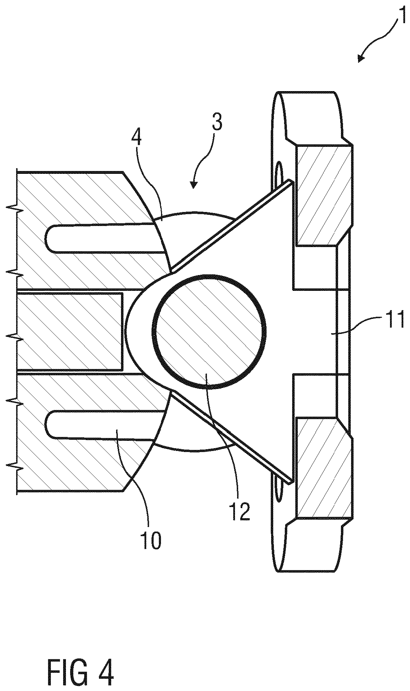

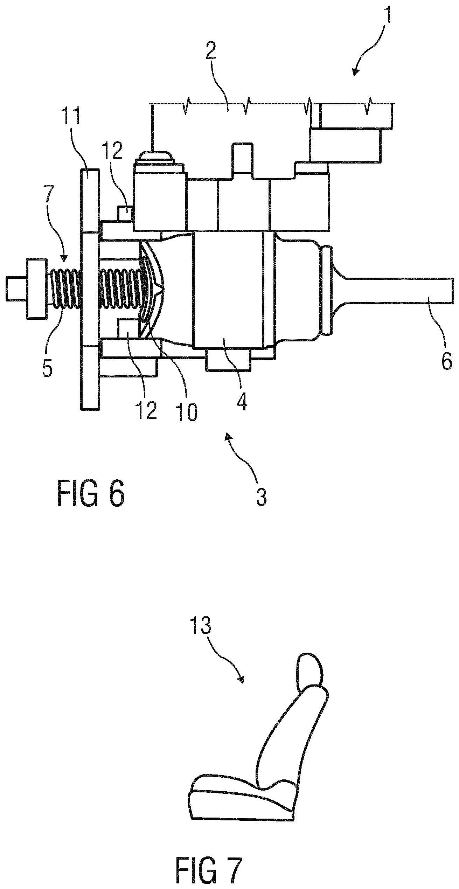

Die **Figuren 1** **und** **2** zeigen aus dem Stand der Technik bekannte Ausführungsformen eines Spindelantriebs 1. Die **Figuren 3 bis 6** zeigen verbesserte Ausführungsformen eines solchen Spindelantriebs 1, beispielsweise für einen Verstellmechanismus eines hier nicht dargestellten Fahrzeugs, zum Beispiel für eine elektrische Höhenverstellung eines in **Figur 7** dargestellten Fahrzeugsitzes 13 des Fahrzeugs.

Der Spindelantrieb 1 umfasst in allen dargestellten Ausführungsformen einen Elektromotor 2 und eine Getriebeanordnung 3 mit einem in einem Getriebegehäuse 4 angeordneten Getriebe, das zweckmäßigerweise ein Schneckenrad umfasst. Der Elektromotor 2 ist über das Getriebe, zweckmäßigerweise über dessen Schneckenrad, mit einer Gewindespindel 5 gekoppelt. Über das Getriebe, zweckmäßigerweise über dessen Schneckenrad, ist eine Drehbewegung des Elektromotors 2 auf die Gewindespindel 5 übertragbar. Durch den Spindelantrieb 1 ist es ermöglicht, eine rotatorische Bewegung des Elektromotors 2 über das Getriebe in eine translatorische Bewegung der Gewindespindel 5 umzuwandeln.

Wird der Spindelantrieb 1 zur Höhenverstellung des Fahrzeugsitzes 13 verwendet, so ist zweckmäßigerweise der Spindelantrieb 1 an einem Teil des Fahrzeugsitzes 13 und ein Ende der Gewindespindel 5 an einem relativ dazu beweglichen Teil des Fahrzeugsitzes 13 befestigt, beispielsweise an jeweils einem Gestellteil des Fahrzeugsitzes 13. Zweckmäßigerweise weist dieses Ende der Gewindespindel 5 hierzu ein Befestigungselement 6 auf, welches zum Beispiel, wie in den **Figuren 1 bis 3** sowie **5 und 6** gezeigt, in Form einer Befestigungsöse ausgebildet ist.

In den hier dargestellten Ausführungsbeispielen ist vorgesehen, dass die Gewindespindel 5 als eine sich nicht drehende Gewindespindel 5 ausgebildet ist, d. h. das Getriebe wirkt aufgrund einer Drehbewegung des Elektromotors 2, zweckmäßigerweise über das Schneckenrad, derart auf ein Gewinde 7 der Gewindespindel 5 ein, dass diese eine translatorische Bewegung in Richtung ihrer Längsachse ausführt, wobei sich die Gewindespindel 5 nicht um ihre Längsachse dreht. Dabei führt eine Drehbewegung des Elektromotors 2 in eine Drehrichtung zu einer translatorischen Bewegung der Gewindespindel 5 in eine Richtung und eine Drehbewegung des Elektromotors 2 in die Gegendrehrichtung führt zu einer entprechenden translatorischen Bewegung der Gewindespindel 5 in die Gegenrichtung, d. h. die Gewindespindel 5 bewegt sich, je nach Drehrichtung des Elektromotors 2, vor und wieder zurück. Durch eine entsprechende Kopplung mit dem Fahrzeugsitz 13 resultiert daraus bei einer Verwendung des Spindelantriebs 1 in einem Verstellmechanismus zur elektrischen Höhenverstellung des Fahrzeugsitzes 13 eine entsprechende Höhenveränderung des Fahrzeugsitzes 13.

Bei einem derartigen Verstellmechanismus ist es vorgesehen, den Spindelantrieb 1 derart am Fahrzeugsitz 13 zu lagern, dass er um eine Schwenkachse y drehbar und/oder schwenkbar lagerbar oder gelagert ist, zweckmäßigerweise am Fahrzeugsitz 13 und/oder an einem Gestell des Fahrzeugsitzes 13, über welches der Fahrzeugsitz 13 am Fahrzeug befestigt oder befestigbar ist und welches zweckmäßigerweise ein Bestandteil des Verstellmechanismus ist. Die Schwenk- und/oder Drehbewegung des Spindelantriebs resultiert aus der Höhenveränderung des Fahrzeugsitzes 13 und damit des daran angeordneten Endes der Gewindespindel 5, während der Spindelantrieb 1 über die Schwenkachse y an dem Teil des Fahrzeugsitzes 13, zweckmäßigerweise des Gestells, gelagert ist, welcher diese Höhenänderung nicht mitmacht oder in anderem Ausmaß vollzieht. Auch eine umgekehrte Anordnung des Endes der Gewindespindel 5 und des Spindelantriebs 1 über die Schwenkachse y ist möglich.

Diese Schwenkachse y, auch als Rotationsachse oder Drehachse bezeichnet, ist bei einem im Fahrzeug angeordneten Fahrzeugsitz 13, welcher in Fahrtrichtung oder entgegen der Fahrtrichtung ausgerichtet ist, zweckmäßigerweise parallel zu einer Y-Achse des Fahrzeugs, d. h. parallel zu einer Querachse des Fahrzeugs, ausgerichtet. In den **Figuren 1 bis 3** ist diese Schwenkachse y oder zumindest deren Verlauf durch eine Strichpunktlinie angedeutet.

Der in **Figur 1** dargestellte aus dem Stand der Technik bekannte Spindelantrieb 1 ist als ein sogenannter Käfig-Spindelantrieb ausgebildet. Dabei wird ein Käfig 8 zur Halterung des Getriebes mit seinem Getriebegehäuse 4 und darüber zur Halterung des gesamten Spindelantriebs 1 am Fahrzeugsitz 13 verwendet. Der Käfig 8 weist dabei auch die Schwenkachse y auf. Daraus resultieren jedoch als Nachteile eine instabile Lagerung und ein großer Bauraumbedarf.

**Figur 2** zeigt eine weitere Ausführungsform eines aus dem Stand der Technik bekannten Spindelantriebs 1, bei welchem die Schwenkachse y als eine externe Schwenkachse y durch zusätzliche Anbindungsteile 9 ausgebildet ist. Durch diese zusätzlichen Anbindungsteile 9 entstehen zusätzliche Material- und Montagekosten, ein hoher Montageaufwand, ebenfalls ein hoher Bauraumbedarf und zudem ein hohes Gewicht. Zudem ist eine aufwändige festigkeitsgerechte Verbindung zwischen dem Getriebegehäuse 4 und einem Getriebedeckel sowie zwischen dem Getriebegehäuse 4 und einem Getriebehalter erforderlich.

Bei den in den **Figuren 3 bis 6** dargestellten und gegenüber den aus dem Stand der Technik bekannten Spindelantrieben 1 wesentlich vorteilhafteren Ausführungsformen des Spindelantriebs 1 umfasst der Spindelantrieb 1 jeweils den Elektromotor 2 und die Getriebeanordnung 3, welche das Getriebe mit dem Getriebegehäuse 4, einen Getriebedeckel 10 und einen Getriebehalter 11 umfasst. Dabei ist vorgesehen, dass eine Schwenkachse y, um welche der Spindelantrieb 1 drehbar und/oder schwenkbar lagerbar oder gelagert ist, und zumindest eine Aufnahme für die zumindest eine Schwenkachse y durch das Getriebegehäuse 4 gebildet ist. D. h. die Getriebeanordnung 3 ist derart ausgebildet, dass das

Getriebegehäuse 4 und der Getriebehalter 11 gemeinsam die eine Schwenkachse y und die zumindest eine Aufnahme für die Schwenkachse y bilden.

Nach der Montage des Spindelantriebs 1 und dessen Montage am Fahrzeugsitz 13 und/oder Gestell des Fahrzeugsitzes 13 und/oder Fahrzeug sind somit zumindest das Getriebegehäuse 4 und der Getriebehalter 11 und über diese der gesamte Spindelantrieb 1 über zwei Bolzen 12 am Fahrzeugsitz 13 drehbar und/oder schwenkbar gehalten. Die zwei Bolzen 12 bilden dabei zweckmäßigerweise die Schwenkachse y.

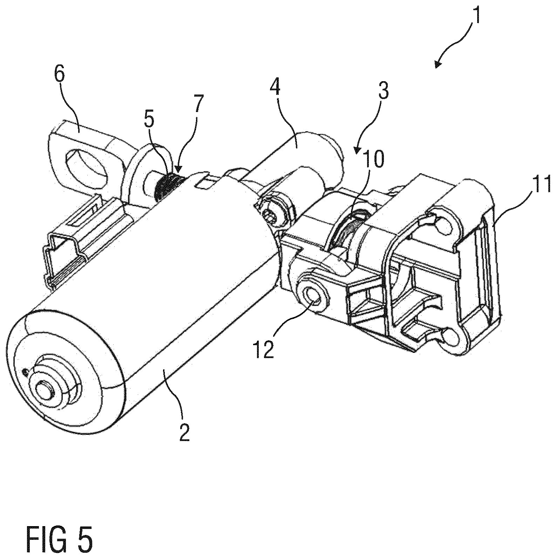

In der nicht zur Erfindung gehörenden Ausführungsform gemäß **Figur 5** sind die zwei Bolzen 12 als Zusatzteil ausgebildet. In der zur Erfindung gehörenden Ausführungsform gemäß Figur 6 sind die zwei Bolzen 12 am Getriebehalter 11 ausgebildet.

Durch diese Ausführungsform der Getriebeanordnung 3 und des Spindelantriebs 1 gemäß der Figur 6, wird eine stabile Lagerung des Spindelantriebs 1 erreicht. Zudem werden dadurch ein geringerer Bauraumbedarf, geringere Material- und Montagekosten, ein geringerer Montageaufwand und ein geringeres Gewicht erreicht. Ein weiterer Vorteil dieser Lösung besteht darin, dass der

Getriebedeckel 10 nur auf Druck über die Gewindespindel 5 und das Schneckenrad in einer Hauptlastrichtung beansprucht wird. Die Hauptlastrichtung verläuft dabei parallel zur Längsachse und somit zur translatorischen Bewegungsrichtung der Gewindespindel 5. Daher muss keine feste Verbindung zwischen Getriebedeckel 10 und Getriebegehäuse 4 oder zwischen Getriebedeckel 10 und Getriebehalter 11 realisiert werden, da der Getriebedeckel 10 in dieser Hauptlastrichtung zwischen dem Getriebegehäuse 4 und dem Getriebehalter 11 und/oder der durch zwei Bolzen 12 gebildeten Schwenkachse y angeordnet ist und somit durch das Getriebegehäuse 4 einerseits sowie durch den Getriebehalter 11 und/oder die Schwenkachse y andererseits in seiner Position gehalten ist.

Der Getriebedeckel 10 oder zumindest eine Außenseite des Getriebedeckels 10 kann zur Ausführung der Dreh- und/oder Schwenkbewegung um die Schwenkachse y beispielsweise konkav oder konvex ausgebildet sein, insbesondere konkav oder konvex in Richtung des Getriebehalters 11. Dadurch wird ein ausreichender Freiraum für die Schwenkachse y geschaffen.

Wie in **Figur 6** erkennbar, ist hier die Außenseite des Getriebedeckels 10 konkav ausgebildet, um den Freiraum für die durch die Bolzen 12 gebildete Schwenkachse y zu schaffen. Eine hier nicht sichtbare Innenseite des Getriebedeckels 10 kann beispielsweise entsprechend konvex oder eben ausgebildet sein oder ebenfalls konkav oder in einer anderen Form.

### Bezugszeichenliste

- 1: Spindelantrieb
- 2: Elektromotor
- 3: Getriebeanordnung
- 4: Getriebegehäuse
- 5: Gewindespindel
- 6: Befestigungselement
- 7: Gewinde
- 8: Käfig
- 9: Anbindungsteil
- 10: Getriebedeckel
- 11: Getriebehalter
- 12: Bolzen
- 13: Fahrzeugsitz

- y: Schwenkachse

## Patentansprüche

1. Getriebeanordnung (3) für einen Spindelantrieb (1), umfassend ein Getriebegehäuse (4) und einen Getriebehalter (11), wobei eine Schwenkachse (y), um welche der Spindelantrieb (1) drehbar und/oder schwenkbar lagerbar oder gelagert ist, vorgesehen ist, und umfassend zwei Bolzen (12), welche die Schwenkachse (y) bilden,
**dadurch gekennzeichnet, dass** die Bolzen (12) als ein Bestandteil des Getriebehalters (11) an diesem ausgebildet sind so dass die Schwenkachse (y) durch den Getriebehalter (11) gebildet ist und zumindest eine Aufnahme für die Schwenkachse (y) durch das Getriebegehäuse (4) gebildet ist.

2. Getriebeanordnung (3) nach Anspruch 1,
**gekennzeichnet durch** einen Getriebedeckel (10).

3. Getriebeanordnung (3) nach Anspruch 2,
**dadurch gekennzeichnet, dass** der Getriebedeckel (10) oder zumindest eine Außenseite des Getriebedeckels (10) konkav oder konvex ausgebildet ist.

4. Spindelantrieb (1), umfassend eine Getriebeanordnung (3) nach einem der vorhergehenden Ansprüche, eine Gewindespindel (5) und einen Elektromotor (2).

5. Fahrzeugsitz (13), umfassend mindestens einen Spindelantrieb (1) nach Anspruch 4.

## Claims

1. Gear arrangement (3) for a spindle drive (1), comprising a gear housing (4) and a gear holder (11), a pivot axis (y) being provided, about which the spindle drive (1) is mounted or mountable rotatably and/or pivotably, and comprising two pins (12) which form the pivot axis (y), **characterized in that** the pins (12) are formed as a constituent part of the transmission holder (11) on the latter, so that the pivot axis (y) is formed by the gear holder (11) and at least one receptacle for the pivot axis (y) is formed by the gear housing (4).

2. Gear arrangement (3) according to Claim 1, **characterized by** a gear cover (10).

3. Gear arrangement (3) according to Claim 2, **characterized in that** the gear cover (10) or at least an outer side of the gear cover (10) is of concave or convex configuration.

4. Spindle drive (1), comprising a gear arrangement (3) according to one of the preceding claims, a threaded spindle (5) and an electric motor (2).

5. Vehicle seat (13), comprising at least one spindle drive (1) according to Claim 4.

## Revendications

1. Ensemble de transmission (3) destiné à un entraînement à broche (1), ledit ensemble de transmission comprenant un boîtier de transmission (4) et un support de transmission (11), un axe de pivotement (y) étant prévu sur lequel l'entraînement à broche (1) est monté de manière à pouvoir tourner et/ou pivoter, et comprenant deux boulons (12) qui forment l'axe de pivotement (y), **caractérisé en ce que** les boulons (12) sont conçus sur le support de transmission (11) comme faisant partie de celui-ci de manière à ce que l'axe de pivotement (y) soit formé par le support de transmission (11) et au moins un logement destiné à l'axe de pivotement (y) est formé à travers le boîtier de transmission (4).

2. Ensemble de transmission (3) selon la revendication 1, **caractérisé par** un couvercle de transmission (10) .

3. Ensemble de transmission (3) selon la revendication 2, **caractérisé en ce que** le couvercle de transmission (10) ou au moins un côté extérieur du couvercle de transmission (10) est concave ou convexe.

4. Entraînement à broche (1) comprenant un ensemble de transmission (3) selon l'une des revendications précédentes, une broche filetée (5) et un moteur électrique (2).

5. Siège de véhicule (13) comprenant au moins un entraînement à broche (1) selon la revendication 4.
